# EUROPÄISCHE PATENTSCHRIFT

(11) **EP 1 161 830 B1**
(45) Veröffentlichungstag und Bekanntmachung des Hinweises auf die Patenterteilung: **16.04.2003**
(21) Anmeldenummer: 00907436.0
(22) Anmeldetag: 15.01.2000
(51) Int. Cl.: H04N 5/232, H04N 5/14

(54) **VERFAHREN UND VORRICHTUNG ZUR BESTIMMUNG EINER VERSCHIEBUNG VON BILDERN EINER BILDSEQUENZ**
METHOD AND DEVICE FOR DETERMINING A DISPLACEMENT OF IMAGES IN AN IMAGE SEQUENCE
PROCEDES ET DISPOSITIF POUR DETERMINER UN DECALAGE D'IMAGES D'UNE SEQUENCE D'IMAGES

(30) Priorität: 05.03.1999 DE 19909622
(43) Veröffentlichungstag der Anmeldung: 12.12.2001
(73) Patentinhaber: ROBERT BOSCH GMBH, 70442 Stuttgart (DE)
(72) Erfinder: ENGELSBERG, Andreas, D-31141 Hildesheim (DE)
(86) Internationale Anmeldenummer: DE0000137
(87) Internationale Veröffentlichungsnummer: WO00054497

(56) Entgegenhaltungen:
- EP-A- 0 449 283
- EP-A- 0 535 746
- EP-A- 0 631 432
- EP-A- 0 762 774
- US-A- 4 924 310

## Beschreibung

### Stand der Technik

Die Erfindung geht aus von einem Verfahren zur Bestimmung der Verschiebung von Bildern einer Bildsequenz nach der Gattung des Hauptanspruchs und nach der Gattung des nebengeordneten Anspruchs 4 und von einer Vorrichtung zur Bestimmung der Verschiebung von Bildern einer Bildsequenz nach der Gattung des Anspruchs 12.

Aus dem Artikel H. Rindtorff: "Bildstabilisation in Consumer-Camcordern, Funktion und Wirkungsweise", Fernseh- und Kinotechnik, 49. Jahrgang, Nr.1/2 1995 ist ein Bildstabilisierungssystem bekannt, das ein Bild bei Aufnahmen aus der Hand weitgehend ruhigstellen soll. Das Bild wird dabei in vier Sektoren aufgeteilt, in denen Bewegungsvektoren, die die Verschiebung des Bildes beschreiben, bestimmt werden. Aus den Bewegungsvektoren der einzelnen Sektoren wird ein gesamter Bewegungsvektor bestimmt, der die Auslenkung der Kamera idealerweise repräsentiert.
Der gesamte Bewegungsvektor wird mit einem Dämpfungsfaktor integriert, was bedeutet, daß vergangene Werte der Vektoren berücksichtigt werden und die Größe der Korrektur reduziert wird, wenn die horizontale und vertikale Verschiebung einen Grenzwert überschreitet.

Aus EP 0 762 774 ist eine Vorrichtung zur Bestimmung der Verschiebung von Bildern aus einer Bildsequenz bekannt, die zur Kompensation einer Kamerabewegung verwendet wird. Dabei wird das gesamte Bild in Bildbereiche eingeteilt, in jedem Bildbereich die Bewegungsvektoren bestimmt, aus den Bewegungsvektoren die Verschiebung des Bildes berechnet und die Verschiebung zur Kompensation der Kamerabewegung genutzt.

EP 0 631 432 beschreibt eine Vorrichtung zur Bestimmung der Verschiebung von Bildern aus einer Bildsequenz zur Kompensation einer Kamerabewegung. Aus Bildbereichen des gesamten Bildes wird über die Auswertung von Korrelationswerten die Verschiebung ermittelt und zur Kompensation der Kamerabewegung verwendet

Das erfindungsgemäße Verfahren mit den Merkmalen des Hauptanspruchs hat demgegenüber den Vorteil, daß die Bestimmung der Sicherheit der Bereichsverschiebung der zwei Bildbereiche nicht unabhängig voneinander durchgeführt wird, sondern die ermittelte Bereichsverschiebung des einen der zwei Bildbereiche bestimmt den Wert, den die Schwellwertfunktion annimmt und mit dem die Bereichsverschiebung des anderen der beiden ersten Bildbereiche verglichen wird. Die Bestimmung der Bereichsverschiebung eines Bildbereichs und die Bestimmung ihrer Sicherheit werden somit nicht unabhängig von Bewegungen, insbesondere Bereichsverschiebungen, in anderen Teilen eines Bildes durchgeführt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß die Bestimmung des Korrelationsquotienten jeweils für einen der Mehrzahl von Bildbereichen nach einem Verfahren mit folgenden Schritten bestimmt wird:
- mittels eines Block-Matching-Verfahrens werden für mehrere mögliche Bereichsverschiebungen Verschiebungskorrelationswerte bestimmt,
- die Bereichsverschiebung, für die die Verschiebungskorrelationswerte maximal werden, wird als Bereichsverschiebung des Bildbereichs angesehen,
- der Korrelationsquotient wird aus dem Maximum der Verschiebungskorrelationswerte, dividiert durch den Mittelwert der bestimmten Verschiebungskorrelationswerte, gebildet.
Dadurch wird die Bereichsverschiebung zum einen durch den gesamten Bildbereich bestimmt, da die Verschiebungskorrelationswerte aus einer Summenbildung über sämtliche Bildpunkte oder eine Auswahl von Bildpunkten innerhalb des betrachteten Bildbereichs bestimmt werden. Zum anderen wird der Korrelationsquotient normiert, da das Maximum der Verschiebungskorrelationswerte, aus dem sich die Bereichsverschiebung ergibt, durch den Mittelwert der berechneten Verschiebungskorrelationswerte dividiert wird.

Weiterhin ist es von Vorteil, daß für jeden beliebigen Wert einer Bereichsverschiebung, der kleiner als ein vorgegebener erster Schwellwert ist, von der Schwellwertfunktion der Wert eines vorgegebenen zweiten Schwellwertes angenommen wird und daß für jeden beliebigen Wert einer Bereichsverschiebung, der größer als der vorgegebene erste Schwellwert ist, von der Schwellwertfunktion der Wert des vorgegebenen zweiten Schwellwertes abzüglich eines Produkts angenommen wird, wobei das Produkt als Faktoren einen vorgegebenen Steigungsparameter und eine Differenz umfaßt und wobei die Differenz aus der beliebigen Bereichsverschiebung und dem vorgegebenen ersten Schwellwert gebildet wird. Dies hat den Vorteil, daß für größere ermittelte Bereichsverschiebungen eines Bildbereiches der Bestimmung der Bereichsverschiebung eine ausreichende Sicherheit zugebilligt wird, auch wenn der Korrelationsquotient kleiner ist, was bei einer geringen ermittelten Bereichsverschiebung auf eine weniger gute Korrelation hinweisen würde. Durch die Abhängigkeit der beiden ersten Bildbereiche bei der Bestimmung der Sicherheit für die Bestimmung der Bereichsverschiebung hat die Konstruktion der Schwellwertfunktion zur Folge, daß bei einer relativen großen Bereichsverschiebung des einen der beiden ersten Bildbereiche die Anforderungen an die Sicherheit der Bestimmung der Bereichsverschiebung, das heißt die Anforderungen an die Höhe des Korrelationsquotienten, weniger hoch sind.

Das erfindungsgemäße Verfahren mit den Merkmalen des nebengeordneten Anspruchs 4 hat gegenüber dem Stand der Technik den Vorteil, daß eine besonders einfache und kostengünstige Durchführung des erfindungsgemäßen Verfahrens realisierbar ist, insbesondere dann, wenn z. B. durch eine Hardwareunterstützung Blockverschiebungsinformationen, insbesondere Blockverschiebungsvektoren von kleinen Bildblöcken, ohne oder nur mit geringem Zusatzaufwand, insbesondere aus einem blockbasierten Übertragungsverfahren zur Bandbreitenreduktion, zu erhalten sind.

Durch die in den Unteransprüchen aufgeführten Maßnahmen sind vorteilhafte Weiterbildungen und Verbesserungen des im nebengeordneten Anspruch 4 angegebenen Verfahrens möglich.

Besonders vorteilhaft ist es, daß für jeden der Bildbereiche zur Bestimmung der Bereichsverschiebung, die eine horizontale und vertikale Komponente umfaßt, und zur Bestimmung der Sicherheit der Bestimmung der Bereichsverschiebung ein Verfahren mit folgenden Schritten durchgeführt wird:
- es wird zur Bestimmung der horizontalen Komponente der Bereichsverschiebung eine erste Häufigkeitsverteilung der Häufigkeiten verschiedener Werte der horizontalen Komponente der Blockverschiebungs-Information erstellt, wobei die horizontale Komponente der Bereichsverschiebung dem Wert, für den die erste Häufigkeitsverteilung ihr Hauptmaximum annimmt, der horizontalen Komponente der Blockverschiebungsinformationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungs-Informationen erstellt, wobei die vertikale Komponente der Bereichsverschiebung dem Wert, für den die zweite Häufigkeitsverteilung ihr Hauptmaximum annimmt, der vertikalen Komponente der Blockverschiebungs-Informationen entspricht,
- die Sicherheit der Bestimmung der Bereichsverschiebung wird als hinreichend betrachtet, wenn sämtliche der folgenden Bedingungen erfüllt sind,
   - der Absolutbetrag, der Differenz der Position der Werte die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
   - der Absolutbetrag der Differenz der Position der Werte die dem Hauptmaximum und dem Nebenmaximum der zweiten Häufigkeitsverteilung entsprechen, der vertikalen Komponente der Blockverschiebungsinformationen ist kleiner als eine vorgegebene zweite Differenzschwelle.
   - das Hauptmaximum der ersten Häufigkeitsverteilung ist größer als eine erste Häufigkeitsschwelle,
   - das Hauptmaximum der zweiten Häufigkeitsverteilung ist größer als eine zweite Häufigkeitsschwelle.
Dadurch ist es möglich, mit einfachen Mitteln, insbesondere durch die Betrachtung der Häufigkeiten der auftretenden horizontalen und vertikalen Komponenten der schon vorhandenen Blockverschiebungs-Informationen, zum einen eine Bestimmung der Bereichsverschiebung für einen Bildbereich und zum anderen eine Bestimmung der Sicherheit der Bestimmung der Bereichsverschiebung zu erhalten.

Gemäß den Unteransprüchen sowohl des Hauptanspruchs als auch des nebengeordneten Anspruchs 4 ist es weiterhin von Vorteil, daß eine Trennung einer Bildbewegung, vorzugsweise hervorgerufen durch eine Kamerabewegung, von einer Zusatzbewegung, die sich der Bildbewegung in einigen Bildbereichen des zu korrigierenden Bildes überlagert, durch folgende Schritte durchgeführt wird:
- an unterschiedlichen Positionen eines Bildes wird die Wahrscheinlichkeit, daß die Bildbewegung ohne die Zusatzbewegung auftritt, bestimmt,
- für jeweils einen Bildbereich werden die Position und die Abmessungen in Abhängigkeit der Wahrscheinlichkeit, daß innerhalb des einen Bildbereichs die Bildbewegung ohne die Zusatzbewegung auftritt, bestimmt und fest vorgegeben,
- es wird wenigstens ein erster Bildbereich bevorzugt zur Bestimmung der Verschiebung herangezogen.

Dadurch können Bildbereiche besonders in den Anteilen eines Bildes zur Bestimmung der Verschiebung der Bilder herangezogen werden, die durch eine möglichst große Wahrscheinlichkeit, daß die Bildbewegung ohne die Zusatzbewegung auftritt, ausgezeichnet sind. Hierdurch kann die Bestimmung der Verschiebung von Bildern einer Bildsequenz besonders zuverlässig durchgeführt werden. Weiterhin ist es für die sichere Bestimmung der Verschiebung von Bildern einer Bildsequenz zuträglich, daß die Position und die Abmessungen der Bildbereiche fest vorgegeben werden. Dadurch kann insbesondere für ein spezielles Szenario der Bewegbild-Kommunikation mit relativ geringem Verarbeitungsaufwand eine zuverlässige Bestimmung der Verschiebung vorgenommen werden. Ein erster Bildbereich, der bevorzugt zur Bestimmung der Verschiebung herangezogen wird, kann durch die Wahl seiner Position und seiner Abmessungen innerhalb der Bilder beispielsweise allein zur Bestimmung der Verschiebung herangezogen werden, so daß andere Bildbereiche in einem solchen Fall nicht berücksichtigt werden müssen, was den Verarbeitungsaufwand zur Bestimmung der Verschiebung von Bildern verringert.

Weiterhin ist von Vorteil, daß die Position und die Abmessungen des wenigstens einen ersten Bildbereichs so gewählt werden, daß der wenigstens eine erste Bildbereich der zu korrigierenden Bilder überwiegend vom Bildhintergrund ausgefüllt wird. Da der Bildhintergrund in der Regel von einem Bild zu einem anderen Bild, zwischen denen die Verschiebung festgestellt werden soll, kaum Zusatzbewegungen aufweist, die der Bildbewegung, die insbesondere durch die unabsichtliche Bewegung einer Kamera hervorgerufen wird, überlagert wird, kann ein erster Bildbereich, der zu korrigierenden Bilder vorteilhaft zur Bestimmung der Verschiebung herangezogen werden, wenn er vom Bildhintergrund ausgefüllt wird.

Weiterhin ist es von Vorteil, daß die Position und die Abmessungen wenigstens eines zweiten Bildbereichs so gewählt werden, daß der wenigstens eine zweite Bildbereich der zu korrigierenden Bilder überwiegend vom Bildvordergrund ausgefüllt wird. Dadurch wird die Bestimmung einer Verschiebung von Bildern einer Bildsequenz besonders dann einfach und mit hoher Genauigkeit möglich, wenn beispielsweise der Bildhintergrund einer starken Zusatzbewegung ausgesetzt ist, die der Bildbewegung, die die beispielsweise durch die unbeabsichtigte Kamerabewegung hervorgerufen wird, überlagert ist.

Weiterhin ist es von Vorteil, daß zur Bestimmung der Verschiebung sowohl der wenigstens eine erste als auch der wenigstens eine zweite Bildbereich zur Verfügung steht. Dadurch kann die Bestimmung der Bereichsverschiebung überprüft werden, weil ein Maß für die Sicherheit der Bestimmung der Bereichsverschiebung innerhalb des Verfahrens zugänglich ist. Die Bestimmung einer Sicherheit für die Sicherheit der Bereichsverschiebung dient somit vor allem einer einfachen und zuverlässigen Trennung der Bildbewegung von der ihr überlagerten Zusatzbewegung.

Weiterhin ist es von Vorteil, daß zwei erste Bildbereiche und ein einzelner zweiter Bildbereich zur Bildkorrektur zur Verfügung stehen, wobei die Bestimmung der Verschiebung auf eine der folgenden drei Arten mit absteigender Priorität durchgeführt wird:
- aus dem Mittelwert der Bereichsverschiebungen der zwei ersten Bildbereiche, wenn die Sicherheit der Bestimmung der Bereichsverschiebungen der beiden ersten Bilderreihe als hinreichend betrachtet wird,
- aus der Bereichsverschiebung desjenigen der zwei ersten Bildbereiche, bei dem die Sicherheit der Bestimmung der Bereichsverschiebung als hinreichend betrachtet wird,
- aus der Bereichsverschiebung des zweiten Bildbereiches.

Dadurch ist es möglich, verschiedene Bildbereiche mit unterschiedlicher Priorität für die Bestimmung der Verschiebung von Bildern einer Bildsequenz heranzuziehen. Insbesondere ist es möglich, Bildbereiche, die überwiegend vom Bildhintergrund ausgefüllt sind, bevorzugt für die Bestimmung der Verschiebung von Bildern heranzuziehen, wobei die Verwendung des Mittelwertes der Bereichsverschiebungen der zwei ersten Bildbereiche zu einer zuverlässigen Bestimmung der Verschiebung führen. Die zweite Priorität für die Bestimmung der Verschiebung unter Heranziehung der Bereichsverschiebung aus den beiden ersten Bildbereichen wird insbesondere gewählt, um den Einfluß durch bewegte Objekte im Hintergrund zu minimieren, da ein bewegtes Objekt im einen der beiden ersten Bildbereiche dazu führt, daß die Bereichsverschiebung des anderen der beiden Bildbereiche zur Bestimmung der Verschiebung von Bildern einer Bildsequenz herangezogen wird. Auf der dritten Stufe der Priorität wird die Verschiebung von Bildern aus der Bereichsverschiebung des zweiten Bildbereiches, insbesondere eines Bildbereiches, der überwiegend vom Bildvordergrund ausgefüllt wird, herangezogen.

Weiterhin ist es von Vorteil, daß das Verfahren für eine Kopf-Schulter-Aufnahmesituation eingesetzt wird, wobei die beiden ersten Bildbereiche in einem seitlichen Bildbereich links und rechts, vorzugsweise symmetrische zur senkrechten Mittelachse eines vorgegebenen rechteckigen Bildes, gewählt werden, wobei der Abstand der beiden ersten Bildbereiche vom unteren Bildrand größer als der Abstand der beiden ersten Bildbereiche vom oberen Bildrand gewählt werden, wobei der zweite Bildbereich im Bereich der Bildmitte, vorzugsweise symmetrisch zur senkrechten Mittelachse des rechteckigen Bildes, gewählt wird, wobei vorzugsweise der Abstand des zweiten Bildbereiches vom oberen Bildrand größer als der Abstand des zweiten Bildbereiches vom unteren Bildrand gewählt wird. Durch eine derartige Wahl der Bildbereiche ist es, insbesondere für eine Kopf-Schulter-Aufnahmesituation, möglich, die Informationen aus den Bildbereichen sinnvoll für die Bestimmung der Bereichsverschiebungen und sinnvoll mittels einer Priorisierung der Heranziehung von Bereichsverschiebungen für die Bestimmung der Verschiebung von Bildern einer Bildsequenz zu verwenden.

Die erfindungsgemäße Vorrichtung zur Bestimmung einer Verschiebung von Bildern einer Bildsequenz mit den Merkmalen des nebengeordneten Anspruchs 12 hat hat gegenüber dem Stand der Technik den Vorteil, daß die Vorrichtung eine Verschiebungsdetektionsschaltung (100) und eine Vergrößerungsschaltung (200) umfaßt, wobei die Verschiebungsdetektionsschaltung (100) einen Bereichsverschiebungsdetektor (110), einen Bildspeicher (120) und einen Mikrocomputer (130) umfaßt und wobei die Verschiebungsdetektionsschaltung (100) die Verschiebung (15) bestimmt. Dadurch kann die Verschiebung, insbesondere durch die Implementierung der Verfahrensschritte des erfindungsgemäßen Verfahrens gemäß dem Hauptanspruch bzw. gemäß dem nebengeordneten Anspruch 4 in einer integrierten Schaltung oder auf einer Leiterplatte, zu einer schnelleren und kostengünstigeren Ausführung der erfindungsgemäßen Verfahren führen.

### Zeichnung

Ein Ausführungsbeispiel der Erfindung ist in der Zeichnung dargestellt und in der nachfolgenden Beschreibung näher erläutert.

Es zeigen:
Figur 1 ein Blockschaltbild der erfindungsgemäßen Vorrichtung,
Figur 2 das Prinzip der Bildstabilisierung durch die Bestimmung einer Verschiebung von Bildern einer Bildsequenz,
Figur 3 ein Ablaufdiagramm zur Bildstabilisierung und
Figur 4 ein Beispiel für die Wahl von Bildbereichen innerhalb eines Bildes für die Durchführung des erfindungsgemäßen Verfahrens.

### Beschreibung des Ausführungsbeispiels:

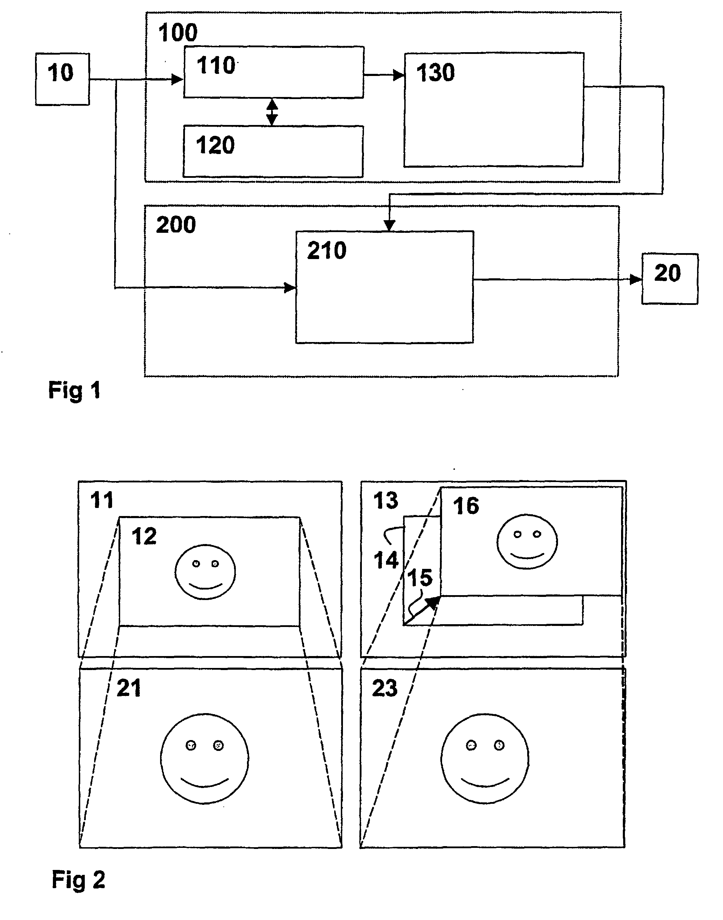

Figur 1 zeigt ein Blockschaltbild der erfindungsgemäßen Vorrichtung zur Bestimmung einer Verschiebung von Bildern einer Bildsequenz. Die erfindungsgemäße Vorrichtung umfaßt einen Eingang 10, einen Ausgang 20 eine Verschiebungsdetektionsschaltung 100 und eine Vergrößerungsschaltung 200. Die Verschiebungsdetektionsschaltung 100 umfaßt einen Bereichsverschiebungsdetektor 110, einen Bildspeicher 120 und einen Mikrocomputer 130. Weiterhin umfaßt die Verschiebungsdetektionsschaltung 100 einen nicht bezeichneten Eingang der mit dem Eingang 10 der erfindungsgemäßen Vorrichtung, mit dem Bereichsverschiebungsdetektor 110 und mit dem Bildspeicher 120 verbunden ist. Weiterhin umfaßt die Verschiebungsdetektionsschaltung 100 einen nicht bezeichneten Ausgang, der mit dem Mikrocomputer 130 verbunden ist, wobei der Bereichsverschiebungsdetektor 110 ebenfalls mit dem Mikrocomputer 130 verbunden ist. Die Vergrößerungsschaltung 200 umfaßt zwei nicht bezeichnete Eingänge und einen Ausgang, der mit dem Ausgang 20 der Vorrichtung verbunden ist. Die beiden Eingänge der Vergrößerungsschaltung 200 sind jeweils mit einem Vergrößerungsprozessor 210 verbunden, wobei einer der beiden Eingänge der Vergrößerungsschaltung 200 mit dem Eingang 10 der Vorrichtung verbunden ist und wobei der andere der beiden Eingänge der Vergrößerungsschaltung 200 mit dem Ausgang der Verschiebungsdetektionsschaltung 100 verbunden ist.

In Figur 2 ist ein Beispiel zur Bildstabilisierung, beispielsweise zur Kompensation von Kamerabewegungen dargestellt. Ein erstes Eingangsbild 13 wird dabei zu einem ersten Ausgangsbild 23 korrigiert, wobei auf Bildinformationen eines zweiten, vorzugsweise zeitlich davorliegenden, Eingangsbildes 11 zurückgegriffen wird.

Das zweite Eingangsbild 11 umfaßt einen Bildausschnitt, der durch Vergrößerung zum zweiten Ausgangsbild 21 vergrößert wird. Das zweite Eingangsbild 11 wird dabei von der Kamera vollständig aufgenommen, jedoch sieht beispielsweise ein Benutzer der erfindungsgemäßen Vorrichtung lediglich den Bildausschnitt in vergrößerter Form als zweites Ausgangsbild 21. Der Bildausschnitt wird dabei als zweites Bild 12 oder auch als korrigiertes zweites Bild 12 bezeichnet.

Gemäß einer ersten Ausführungsform des erfindungsgemäßen Verfahrens dient das korrigierte zweite Bild 12 der Korrektur des ersten Eingangsbildes 13. Das erste Eingangsbild 13 umfaßt ebenfalls einen Bildausschnitt, der hier als unkorrigiertes erstes Bild 14 bezeichnet wird. Durch Vergleich des unkorrigierten ersten Bildes 14 mit dem zweiten Bild 12 bzw. dem korrigierten zweiten Bild 12 kann eine Verschiebung 15 bestimmt werden, so daß durch die Verschiebung 15 das unkorrigierte erste Bild 14 in ein korrigiertes erstes Bild 16 überführt werden kann. Bei dem Vergleich des unkorrigierten ersten Bildes 14 mit dem zweiten Bild 12 werden insbesondere nicht die gesamten Bilddaten herangezogen, sondern lediglich die Bilddaten aus (nicht dargestellten) Bildbereichen des ersten Bildes 14 und des zweiten Bildes 12.

Gemäß einer zweiten Ausführungsform des erfindungsgemäßen Verfahrens dient das zweite Eingangsbild 11 der Korrektur des ersten Eingangsbildes 13. Durch Vergleich des ersten Eingangsbildes 13 mit dem zweiten Eingangsbild 11 kann die Verschiebung 15 bestimmt werden, so daß durch die Verschiebung 15 das unkorrigierte erste Bild 14 in das korrigierte erstes Bild 16 überführt werden kann. Bei dem Vergleich des unkorrigierten ersten Eingangsbildes 13 mit dem zweiten Eingangsbild 11 werden insbesondere nicht die gesamten Bilddaten herangezogen, sondern lediglich die Bilddaten aus (nicht dargestellten) Bildbereichen des ersten Eingangsbildes 13 und des zweiten Eingangsbildes 11.

Das korrigierte erste Bild 16 kann nunmehr sowohl gemäß der ersten Ausführungsform als auch gemäß der zweiten Ausführungsform des erfindungsgemäßen Verfahrens dem Benutzer als erstes Ausgangsbild 23 zur Ansicht gebracht werden. Gegenüber dem zweiten Ausgangsbild ist die Verschiebung des ersten Eingangsbildes 13 bzw. des korrigierten ersten Bildes 16 nicht mehr im ersten Ausgangsbild 23 zu bemerken.

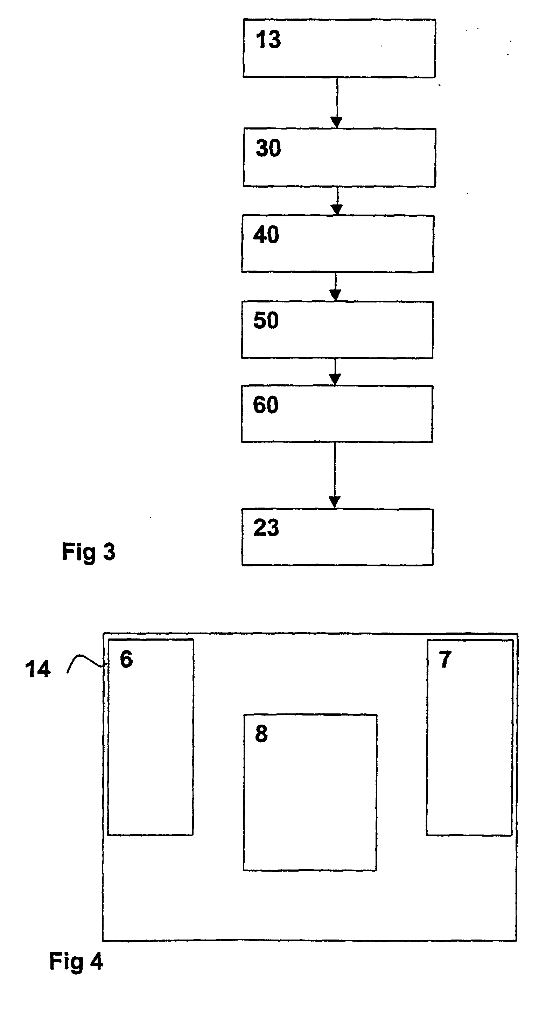

In Figur 3 sind die wesentlichen Verfahrensschritte des erfindungsgemäßen Verfahrens anhand eines Ablaufdiagramms am Beispiel der Korrektur des ersten Eingangsbildes 13 dargestellt. In einem ersten Ablaufschritt 30 wird die Bestimmung der Bereichsverschiebungen von Bildbereichen durchgeführt. Hierbei wird das erste Eingangsbild 13 mit dem korrigierten zweiten, insbesondere zeitlich davorliegenden, Bild 12 oder dem zweiten,insbesondere zeitlich davorliegenden, Eingangsbild 11 verglichen. Anschließend wird in einem Ablaufschritt 40 die Verschiebung des ersten Bildes 14 gemäß dem erfindungsgemäßen Verfahren bestimmt. In einem dritten Ablaufschritt 50 wird die Verschiebung des unkorrigierten ersten Bildes 14 um den Verschiebungsvektor 15 durchgeführt. Das Resultat dieser Operation ist das korrigierte erste Bild 16. Anschließend wird in einem vierten Ablaufschritt 60 eine Vergrößerung des korrigierten ersten Bildes 16 durchgeführt, die zu dem ersten Ausgangsbild 23 führt.

Zur Korrektur eines weiteren Eingangsbildes gemäß dem erfindungsgemäßen Verfahren kann das Resultat des dritten Ablaufschrittes 50 dem ersten Ablaufschritt 30 dadurch zugänglich gemacht werden, indem es, vorzugsweise in dem Bildspeicher 120, abgespeichert wird. Das Resultat des dritten Ablaufschrittes 50 ist das korrigierte erste Bild 16 das somit an die Stelle des korrigierten zweiten Bildes 12 tritt und im Zusammenhang mit der Korrektur des weiteren Eingangsbildes zu einer Bestimmung von Bereichsverschiebungen im ersten Ablaufschritt 30 herangezogen wird.

Alternativ dazu kann in dem Bildspeicher 120 auch das erste Eingangsbild 13 beziehungsweise das unkorrigierte erste Bild 14 zusammen mit der bestimmten Verschiebung 15 zur Korrektur eines weiteren Eingangbildes gespeichert werden.

In Figur 4 ist ein Beispiel einer Verteilung von Bildausschnitten 6,7,8 innerhalb des ersten Eingangsbildes 14 dargestellt. Dabei sind zwei erste Bildbereiche 6,7, insbesondere für die Anwendung des erfindungsgemäßen Verfahrens auf eine Kopf-Schulter-Aufnahmesituation, symmetrisch zur senkrechten Mittelachse des vorgegebenen rechteckigen ersten Bildes 14 gewählt. Der Abstand der beiden ersten Bildbereiche 6,7 vom unteren Bildrand ist dabei größer als der Abstand der beiden ersten Bildbereiche 6,7 vom oberen Bildrand.
Ein zweiter Bildbereich 8 ist im Bereich der Bildmitte des ersten Bildes 14, vorzugsweise symmetrisch zur senkrechten Mittelachse des rechteckigen Bildes, gewählt, wobei vorzugsweise der Abstand des zweiten Bildbereichs 8 vom oberen Bildrand größer als der Abstand des zweiten Bildbereiches vom unteren Bildrand gewählt ist.

Die erfindungsgemäßen Verfahren zur Bestimmung einer Verschiebung 15 von Bildern einer Bildsequenz können vorzugsweise zur Bildstabilisierung zur Kompensation der Kamerabewegungen im Hinblick auf die digitale Bewegtbildstabilisierung für mobile Bewegtbild-Kommunikationseinrichtungen eingesetzt werden. Es sollen Bewegungen, die durch die mobile Nutzung einer Bewegtbild-Kommunikationseinrichtung verursacht werden, reduziert bzw. möglichst eliminiert werden.

Das Grundprinzip der Verfahren besteht darin, die Kamerabewegung aus der relativen Verschiebung aufeinanderfolgender Bilder abzuleiten und aus einem Eingangsbild, beispielsweise dem ersten Eingangsbild 13, den Teilbereich, beispielsweise das korrigierte erste Bild 16, zu extrahieren, der aufgrund der ermittelten Verschiebung 15, insbesondere des korrigierten ersten Bildes 16 gegenüber dem unkorrigierten ersten Bild 14, die Kamerabewegung kompensiert.

Bei den erfindungsgemäßen Verfahren wird beispielsweise eine Mehrzahl von Bildbereichen 6,7,8 zur Bestimmung der Verschiebung 15 zur Verfügung gestellt. Die Bildbereiche können durch ihre Position und ihre Abmessungen innerhalb des Bildes eindeutig bestimmt werden. Durch die vorteilhafte Wahl der Position sowie der Abmessungen der Bildbereiche 6,7,8 kann nun in besonders einfacher Weise eine Trennung einer Bildbewegung, die vorzugsweise von einer Kamerabewegung hervorgerufen wird, von einer Zusatzbewegung, die sich der Bildbewegung in Teilbereichen des zu korrigierenden Bildes überlagert, durchgeführt werden. Dazu wird die Wahrscheinlichkeit, daß die Bildbewegung ohne die Zusatzbewegung auftritt an unterschiedlichen Positionen der Bilder einer Bildsequenz bestimmt, woraus sich innerhalb des Bildes bevorzugte Anteile ergeben, mittels derer eine Trennung der Bildbewegung von der Zusatzbewegung erreicht werden kann. So ist beispielsweise für die spezielle Aufnahmesituation eines Sprechers, der sich zentriert in der Bildmitte befindet, die Wahl der in der Figur 4 dargestellten Bildbereiche 6,7,8 besonders vorteilhaft. Die besonderen Eigenschaften der Aufnahmesituation werden als A-Priori-Kenntnisse bei der Auswahl und der Festlegung der Bildbereiche 6,7,8 verwertet. Gemäß dieser Aufnahmesituation kann angenommen werden, daß die beiden ersten Bildbereiche 6,7 im wesentlichen im Hintergrund des Bildes und der zweite Bildbereich 8 im wesentlichen im Vordergrund befinden. Dies bedeutet, daß die beiden ersten Bildbereiche 6,7 hauptsächlich mit Bilddaten aus dem Bildhintergrund ausgefüllt sind und das der zweite Bildbereich 8 hauptsächlich mit Bilddaten aus dem Bildvordergrund ausgefüllt ist. Hieraus läßt sich eine Priorisierung der beiden ersten Bildbereiche 6,7 vorteilhaft anwenden, so daß die Bestimmung einer Verschiebung 15 von Bildern einer Bildsequenz sich bevorzugt aus der Bestimmung der Bereichsverschiebung der beiden ersten Bildbereiche 6,7 ergibt. Nur wenn die Verwendung von Bereichsverschiebungen aus den beiden ersten Bildbereichen 6,7, lediglich eine Bereichsverschiebung zuläßt, die mit einer großen Unsicherheit bzw. mit einer ungenügend großen Sicherheit behaftet ist, wird der zweite Bildbereich 8 zur Bestimmung der Verschiebung 15 von Bildern herangezogen. Diese Priorisierung ist im angegebenen Beispiel gleichbedeutend damit, daß die Bildstabilisierung bevorzugt mittels Bildhintergrundinformation durchgeführt wird. Hierbei beziehen sich die Verfahren jedoch nicht ausschließlich auf die Unterscheidung und unterschiedliche Priorisierung zur Bestimmung einer Verschiebung von Bildern einer Bildsequenz von Hintergrund- oder Vordergrundinformationen, sondern auch beispielsweise auf die Heranziehung von Kriterien wie Kantendetektion, Abwesenheit von Kantendetektion oder ähnlichem.

Die beiden ersten Bildbereiche 6,7, haben im angegebenen Beispiel im Qcif-Format typischerweise eine Ausdehnung von 120 Bildpunkten in vertikaler Richtung und 40 Bildpunkten in horizontaler Richtung. Der zweite Bildbereich 8 erstreckt sich bei diesem Bildformat typischerweise über 135 Bildpunkte in vertikaler und 85 Bildpunkte in horizontaler Richtung.

Die erfindungsgemäßen Verfahren zur Bestimmung einer Verschiebung 15 von Bildern einer Bildsequenz dienen dazu, den Einfluß durch bewegte Objekte, insbesondere im Hintergrund des Bildes, zu minimieren, indem mit Hilfe eines Entscheidungskriteriums bewegte Objekte in Bildbereichen detektiert werden. Durch die bewegten Objekte beispielsweise in einem der Bildbereiche 6, 7, 8 entsteht eine Zusatzbewegung, die sich der Verschiebung, die von der Kamerabewegung hervorgerufen wird, überlagert.

Zur Bestimmung der Bereichsverschiebung für einen Bildbereich 6,7,8 werden erfindungsgemäß alternativ zwei Verfahren angewandt, je nachdem ob Blockverschiebungsinformationen aus einem blockbasierten Codierverfahren, beispielsweise aus einem blockbasierten Übertragungsverfahren zur Bandbreitenreduktion, mit einfachen Mitteln zugänglich sind oder nicht.
Wenn Blockverschiebungsinformationen nicht einfach zugänglich sind, wird vorzugsweise eine Blockmatching-Methode gemäß dem Hauptanspruch zur Bestimmung der Bereichsverschiebung angewendet, mit der eine Zusatzbewegung, das heißt eine lokale Bewegung innerhalb eines der beiden ersten Bildbereiche 6,7, detektiert werden kann. Die Detektion einer in einem Bildbereich 6, 7, 8 auftretenden lokalen Bewegung, z.B. ein erscheinendes Objekt, kann durch Auswertung der Verschiebungskorrelationswerte aus dem Blockmatching-Verfahren erfolgen. Hierzu wird das Verhältnis des Mittelwertes der Verschiebungskorrelationswerte zum Maximum der Korrelationswerte mit einer adaptiven Schwellwertfunktion verglichen. Zur Bestimmung des Mittelwertes der Verschiebungskorrelationswerte wird die Summe über alle bestimmten Korrelationswerte gebildet und anschließend durch deren Anzahl dividiert. Das Maximum der Verschiebungskorrelationswerte wird für eine bestimmte Bereichsverschiebung angenommen. Diejenige Bereichsverschiebung, die dem Maximum der Verschiebungskorrelationswerte entspricht, wird als die Bereichsverschiebung des Bildbereichs angenommen. Der Korrelationsquotient entspricht dem Maximum der Verschiebungskorrelationswerte geteilt durch den Mittelwert der Verschiebungskorrelationswerte und ist somit genormt. Eine Zusatzbewegung, das heißt eine lokale Bewegung innerhalb des Bildbereiches, ist dann detektiert, wenn der Korrelationsquotient kleiner ist als der Wert einer adaptiven Schwellwertfunktion. Die adaptive Schwellwertfunktion ist abhängig von der Länge eines Verschiebungsvektors, der eine Bereichsverschiebung angibt. Erfindungsgemäß wird für die Detektion einer Zusatzbewegung beziehungsweise einer lokalen Bewegung in einem der beiden ersten Bildbereiche 6,7 der Korrelationsquotient für den betrachteten ersten Bereich 6,7 mit dem Wert der adaptiven Schwellwertfunktion verglichen, wobei sich der Wert für die adaptive Schwellwertfunktion aus der Vektorlänge der Verschiebung 15 des anderen der beiden ersten Bildbereiche 6,7, ergibt. Dabei ist die Schwellwertfunktion folgendermaßen definiert:
- für jede beliebige Vektorlänge des Bereichsverschiebungsvektors beziehungsweise für jede beliebige Bereichsverschiebung, die kleiner ist als ein vorgegebener erster Schwellwert, wird von der Schwellwertfunktion der Wert eines vorgegebenen zweiten Schwellwertes angenommen,
- für jede beliebige Vektorlänge des Bereichsverschiebungsvektors bzw. für jede beliebige Bereichsverschiebung, die größer ist als der vorgegeben erste Schwellwert, wird von der Schwellwertfunktion der Wert des vorgegebenen zweiten Schwellwertes abzüglich eines Produkts angenommen, wobei das Produkt als Faktoren einen vorgegebenen Steigungsparameter und eine Differenz umfaßt, und wobei die Differenz aus der beliebigen Bereichsverschiebung und dem vorgegebenen ersten Schwellwert gebildet wird.

Das Verfahren zur Bestimmung der Verschiebung von Bildern einer Bildsequenz gemäß dem nebengeordneten Anspruch 4 beruht insbesondere auf der Verwendung von Blockverschiebungsinformationen aus einem blockbasierten Codierverfahren. Dabei werden die Verschiebungsvektoren von kleinen Blöcken, z. B. der Größe 8 * 8 oder 16 * 16, zur Bestimmung der Bereichsverschiebung der Bildbereiche 6, 7, 8 genutzt. Somit werden die Informationen aus dem blockbasierten Codierverfahren zur Reduktion des Rechenaufwands verwendet. Dieser Ansatz ist insbesondere dann von Interesse, falls, z. B. durch eine Hardwareunterstützung, die Blockverschiebungsvektoren ohne oder mit nur geringem Zusatzaufwand zu erhalten sind. Die Detektion einer lokalen Bewegung innerhalb eines Bildbereichs 6, 7, 8, insbesondere von einem der beiden ersten Bildbereiche 6, 7, kann besonders einfach durchgeführt werden, wenn Verschiebungsvektoren von kleinen Blöcken des Bildes bekannt sind.
Dabei werden zunächst alle Verschiebungsvektoren für Blöcke, die innerhalb eines der Bildbereiche 6,7,8 liegen, dem entsprechenden Bildbereich 6,7,8 zugeordnet. Von den jeweils zugeordneten Verschiebungsvektoren werden für die horizontalen und vertikalen Komponenten separate Häufigkeitsverteilungen beziehungsweise Histogramme erstellt. Es ergeben sich somit für jeden Bildbereich 6,7,8 eine erste Häufigkeitsverteilung für die horizontale Komponente und eine zweite Häufigkeitsverteilung für die vertikale Komponente der Verschiebungsvektoren der Bildblöcke. Die Detektion einer Zusatzbewegung bzw. lokalen Bewegung erfolgt über die Analyse der einem Bildbereich zugeordneten Häufigkeitsverteilungen. Falls die Differenz der Positionen zwischen dem Hauptmaximum und dem größten Nebenmaximum einer der beiden zugeordneten Häufigkeitsverteilungen einen bestimmten Schwellwert überschreitet und die Größe der Hauptmaxima einen Schwellwert unterschreitet ist eine lokale Bewegung detektiert.
Die Bestimmung einer lokalen oder zusätzlichen Bewegung innerhalb eines Bildbereiches bedeutet, daß die Bestimmung der Bereichsverschiebung nicht mit ausreichender Sicherheit durchgeführt werden konnte. Die Bestimmung der Sicherheit der Bestimmung der Bereichsverschiebung führt damit zu einem negativen Ergebnis was die Bestimmung der Bereichsverschiebung betrifft.

Das Verfahren gemäß dem nebengeordneten Anspruch 4 zur Bestimmung der Bereichsverschiebung und zur Bestimmung der Sicherheit Bestimmung der Bereichsverschiebung kann folgendermaßen beschrieben werden, wobei die Bereichsverschiebung eine horizontale und eine vertikale Komponente umfaßt:
- es wird zur Bestimmung der horizontalen Komponente der Bereichsverschiebung eine erste Häufigkeitsverteilung der Häufigkeiten verschiedener Werte der horizontalen Komponente der Blockverschiebungsinformationen erstellt, wobei die horizontale Komponente der Bereichsverschiebung dem Wert, für den die erste Häufigkeitsverteilung ihr Hauptmaximum annimmt, der horizontalen Komponente der Blockverschiebungs-Informationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungs-Informationen erstellt, wobei die vertikale Komponente der Bereichsverschiebung dem Wert, für den die zweite Häufigkeitverteilung ihr Hauptmaximum annimmt, der vertikalen Komponente der Blockverschiebungsinformationen entspricht,
- die Sicherheit der Bestimmung der Bereichsverschiebung wird als hinreichend betrachtet, wenn sämtliche der folgenden Bedingungen erfüllt sind:
   - der Absolutbetrag der Differenz der Position der Werte, die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
   - der Absolutbetrag der Differenz der Position der Werte, die dem Hauptmaximum und dem Nebenmaximum der zweiten Häufigkeitsverteilung entsprechen, der vertikalen Komponente der Blockverschiebungs-Informationen ist kleiner als eine vorgegebene zweite Differenzschwelle,
   - das Hauptmaximum der ersten Häufigkeitsverteilung ist größer als eine erste Häufigkeitsschwelle,
   - das Hauptmaximum der zweiten Häufigkeitsverteilung ist größer als eine zweite Häufigkeitsschwelle.
Das Verfahren gemäß dem nebengeordneten Anspruch 4 kann somit zur Bestimmung der Verschiebung von Bildern einer Bildsequenz genutzt werden, um den Rechenaufwand zu reduzieren.
Sowohl für das Verfahren gemäß dem Hauptanspruch als auch für das Verfahren gemäß dem nebengeordneten Anspruch 4 wurde ein Kriterium angegeben, daß sich zur Detektion von lokalen Bewegungen innerhalb des relevanten Bildbereichs 6, 7, 8 eignet und welches gleichbedeutend damit ist, daß die Sicherheit der Bestimmung der Bereichsverschiebung nicht ausreichend ist.

## Patentansprüche

1. Verfahren zur Bestimmung einer Verschiebung (15) von Bildern einer Bildsequenz, insbesondere für die Kompensation einer Kamerabewegung, wobei zur Bestimmung der Verschiebung (15) eine Mehrzahl von Bildbereichen (6, 7, 8) von Bildern zur Verfügung steht, wobei jeder Bildbereich (6,7,8) jeweils an einer vorgegebenen Position der Bilder vorgesehen ist, wobei jeder Bildbereich (6,7,8) jeweils vorgegebene Abmessungen, insbesondere vorgegebene Anzahlen von Bildpunkten in verschiedene Richtungen des Bildes, aufweist, **dadurch gekennzeichnet, daß** zur Bildkorrektur eines ersten Bildes (14) der Bildsequenz die Verschiebung (15) entweder aus Bilddaten des ersten Bildes (14) und aus Bilddaten eines zweiten, vorzugsweise dem ersten Bild (14) unmittelbar vorangehenden Bildes (12) der Bildsequenz oder aus Bilddaten des ersten Bildes (14) und aus Bilddaten eines zweiten, vorzugsweise dem ersten Bild (14) unmittelbar vorangehenden Eingangsbildes (11) der Bildsequenz bestimmt wird, wobei als Verschiebung (15) eine Bereichsverschiebung eines Bildbereichs (6,7,8) in Abhängigkeit einer Sicherheit für die Bestimmung der Bereichsverschiebung des einen Bildbereichs (6,7,8) herangezogen wird, wobei die Bereichsverschiebung eines beliebigen Bildbereichs (6,7,8) der Mehrzahl von Bildbereichen (6,7,8) entweder aus den Bilddaten des ersten Bildes (14) und des zweiten Bildes (12) innerhalb des beliebigen Bildbereichs (6,7,8) oder aus den Bilddaten des ersten Bildes (14) und des zweiten Eingangsbildes (11) innerhalb des beliebigen Bildbereichs (6,7,8) bestimmt wird, wobei zur Bestimmung der Bereichsverschiebung von zwei beliebigen Bildbereichen (6,7,8) und zur Bestimmung einer Sicherheit für die Bestimmung der Bereichsverschiebungen ein Verfahren mit folgenden Schritten durchgeführt wird:
- es wird jeweils die Bereichsverschiebung und ein Korrelationsquotient für die zwei Bildbereiche (6,7) gebildet,
- es wird eine Schwellwertfunktion in Abhängigkeit des jeweiligen Wertes der ermittelten Bereichsverschiebungen der zwei Bildbereiche (6,7) bestimmt,
- es wird jeweils der Korrelationsquotient des einen der zwei Bildbereiche (6,7) mit dem Wert verglichen , der sich aus der Schwellwertfunktion für die Bereichsverschiebung des anderen der zwei Bildbereiche (6,7) ergibt,
- die Sicherheit der Bestimmung der Bereichsverschiebung für jeweils einen der zwei Bildbereiche (6,7) wird als hinreichend aufgefaßt, wenn der für den einen Bildbereich (6,7) bestimmte Korrelationsquotient größer ist als der mit ihm zu vergleichende Wert der Schwellwertfunktion.

2. Verfahren nach Anspruch 1, **dadurch gekennzeichnet, daß** die Bestimmung des Korrelationsquotienten jeweils für einen der Mehrzahl von Bildbereichen (6,7,8) nach einem Verfahren mit folgenden Schritten bestimmt wird:
- mittels eines Block-Matching-Verfahrens werden für mehrere mögliche Bereichsverschiebungen Verschiebungskorrelationswerte bestimmt,
- die Bereichsverschiebung, für die die Verschiebungskorrelationswerte maximal werden, wird als Bereichsverschiebung des Bildbereichs (6,7,8) angesehen,
- der Korrelationsquotient wird aus dem Maximum der Verschiebungskorrelationswerte, dividiert durch den Mittelwert der bestimmten Verschiebungskorrelationswerte, gebildet.

3. Verfahren nach Anspruch 1, **dadurch gekennzeichnet, daß** für jeden beliebigen Wert einer Bereichsverschiebung, der kleiner als ein vorgegebener erster Schwellwert ist, von der Schwellwertfunktion der Wert eines vorgegebenen zweiten Schwellwertes angenommen wird und daß für jeden beliebigen Wert einer Bereichsverschiebung, der größer als der vorgegebene erste Schwellwert ist, von der Schwellwertfunktion der Wert des vorgegebenen zweiten Schwellwerts abzüglich eines Produkts angenommen wird, wobei das Produkt als Faktoren einen vorgegebenen Steigungsparameter und eine Differenz umfaßt und wobei die Differenz aus der beliebigen Bereichsverschiebung und dem vorgegebenen ersten Schwellwert gebildet wird.

4. Verfahren zur Bestimmung einer Verschiebung von Bildern einer Bildsequenz, insbesondere für die Kompensation einer Kamerabewegung, wobei zur Bestimmung der Verschiebung (15) wenigstens ein Bildbereich (6,7,8) von Bildern zur Verfügung steht, wobei der wenigstens eine Bildbereich (6,7,8) jeweils an einer vorgegebenen Position der Bilder vorgesehen ist, wobei der wenigstens eine Bildbereich (6,7,8) jeweils vorgegebene Abmessungen, insbesondere vorgegebene Anzahlen von Bildpunkten in verschiedene Richtungen des Bildes, aufweist, **dadurch gekennzeichnet, daß** zur Bildkorrektur eines ersten Bildes (14) einer Bildsequenz die Verschiebung (15) entweder aus Bilddaten des ersten Bildes (14) und aus Bilddaten eines zweiten, vorzugsweise dem ersten Bild unmittelbar vorangehenden, Bildes (12) der Bildsequenz oder aus Bilddaten des ersten Bildes (14) und aus Bilddaten eines zweiten, vorzugsweise dem ersten Bild unmittelbar vorangehenden Eingangsbildes (11) der Bildsequenz bestimmt wird, wobei als Verschiebung (15) eine Bereichsverschiebung des wenigstens einen Bildbereichs (6,7,8) herangezogen wird, wobei Blockverschiebungsinformationen, vorzugsweise Verschiebungsvektoren, aus einem blockbasierten Codierverfahren für den wenigstens einen Bildbereich (6,7,8) zur Bestimmung der Bereichsverschiebung verwendet werden, wobei für die Blockverschiebungsinformationen des wenigstens einen Bildbereichs (6,7,8) Bildblöcke, die innerhalb des wenigstens einen Bildbereichs (6,7,8) liegen, berücksichtigt werden, wobei aus den Bilddaten ein Kriterium Sicherheit bestimmt wird, welches zur Detektion von lokalen Bewegungen innerhalb von wenigstens einem Bildbereich (6,7,8) geeignet ist und wobei die Bestimmung der Verschiebung (15) in Abhängigkeit der Sicherheit durchgeführt wird, derart, dass die Bestimmung der Verschiebung (15) bei Detektion von lokalen Bewegungen nicht erfolgt.

5. Verfahren nach Anspruch 4, **dadurch gekennzeichnet, daß** für den wenigstens einen Bildbereich (6,7,8) zur Bestimmung der Bereichsverschiebung, die eine horizontale und eine vertikale Komponente umfaßt, und zur Bestimmung der Sicherheit der Bestimmung der Bereichsverschiebung ein Verfahren mit folgenden Schritten durchgeführt wird :
- es wird zur Bestimmung der horizontalen Komponente der Bereichsverschiebung eine erste Häufigkeitsverteilung der Häufigkeiten verschiedener Werte der horizontalen Komponente der Blockverschiebungsinformationen erstellt, wobei die horizontale Komponente der Bereichsverschiebung dem Wert, für den die erste Häufigkeitsverteilung ihr Hauptmaximum annimmt, der horizontalen Komponente der Blockverschiebungsinformationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungsinformationen erstellt, wobei die vertikale Komponente der Bereichsverschiebung dem Wert, für den die zweite Häufigkeitsverteilung ihr Hauptmaximum annimmt, der vertikalen Komponente der Blockverschiebungsinformationen entspricht,
- die Sicherheit der Bestimmung der Bereichsverschiebung wird als hinreichend betrachtet, wenn sämtliche der folgenden Bedingungen erfüllt sind:
- der Absolutbetrag der Differenz der Position der Werte, die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
- der Absolutbetrag der Differenz der Position der Werte, die dem Hauptmaximum und dem Nebenmaximum der zweiten Häufigkeitsverteilung entsprechen, der vertikalen Komponente der Blockverschiebungsinformationen ist kleiner als eine vorgegebene zweite Differenzschwelle,
- das Hauptmaximum der ersten Häufigkeitsverteilung ist größer als eine erste Häufigkeitsschwelle,
- das Hauptmaximum der zweiten Häufigkeitsverteilung ist größer als eine zweite Häufigkeitsschwelle.

6. Verfahren nach einem der vorhergehenden Ansprüche, **dadurch gekennzeichnet, daß** eine Trennung einer Bildbewegung, vorzugsweise hervorgerufen durch eine Kamerabewegung, von einer Zusatzbewegung, die sich der Bildbewegung in einigen Bildbereichen (6,7,8) des zu korrigierenden Bildes überlagert, durch folgende Schritte durchgeführt wird:
- an unterschiedlichen Positionen eines Bildes wird die Wahrscheinlichkeit, daß die Bildbewegung ohne die Zusatzbewegung auftritt, bestimmt,
- für jeweils einen Bildbereich werden die Position und die Abmessungen in Abhängigkeit der Wahrscheinlichkeit, daß innerhalb des einen Bildbereichs (6,7,8) die Bildbewegung ohne die Zusatzbewegung auftritt, bestimmt und fest vorgegeben,
- es wird wenigstens ein erster Bildbereich (6,7) bevorzugt zur Bestimmung der Verschiebung (15) herangezogen.

7. Verfahren nach einem der vorhergehenden Ansprüche, **dadurch gekennzeichnet, daß** die Position und die Abmessungen des wenigstens einen ersten Bildbereichs (6,7) so gewählt werden, daß der wenigstens eine erste Bildbereich (6,7) der zu korrigierenden Bilder überwiegend vom Bildhintergrund ausgefüllt wird.

8. Verfahren nach einem der Ansprüche 1 bis 6, **dadurch gekennzeichnet, daß** die Position und die Abmessungen wenigstens eines zweiten Bildbereichs (8) so gewählt werden, daß der wenigstens eine zweite Bildbereich (8) der zu korrigierenden Bilder überwiegend vom Bildvordergrund ausgefüllt wird.

9. Verfahren nach Anspruch 7 oder 8, **dadurch gekennzeichnet, daß** zur Bestimmung der Verschiebung (15) sowohl der wenigstens eine erste (6,7) als auch der wenigstens eine zweite Bildbereich (8) zur Verfügung steht.

10. Verfahren einem der Ansprüche 7 bis 9, **dadurch gekennzeichnet, daß** zwei erste Bildbereiche (6,7) und ein einzelner zweiter Bildbereich (8) zur Bildkorrektur zur Verfügung stehen, wobei die Bestimmung der Verschiebung (15) auf eine der folgenden drei Arten mit absteigender Priorität durchgeführt wird:
- aus dem Mittelwert der Bereichsverschiebungen der zwei ersten Bildbereiche (6,7), wenn die Sicherheit der Bestimmung der Bereichsverschiebungen der beiden ersten Bildbereiche (6,7) als hinreichend betrachtet wird,
- aus der Abschnittsverschiebung desjenigen der zwei ersten Bildbereiche (6,7), bei dem die Sicherheit der Bestimmung der Bereichsverschiebung als hinreichend betrachtet wird,
- aus der Bereichsverschiebung des zweiten Bildbereiches (8).

11. Verfahren nach Anspruch 10, **dadurch gekennzeichnet, daß** das Verfahren für eine Kopf-Schulter-Aufnahmesituation eingesetzt wird, wobei die beiden ersten Bildbereiche (6,7) in einem seitlichen Bereich links und rechts, vorzugsweise symmetrisch zur senkrechten Mittelachse eines vorgegebenen rechteckigen Bildes, gewählt werden, wobei der Abstand der beiden ersten Bildbereiche (6,7) vom unteren Bildrand größer als der Abstand der beiden ersten Bildbereiche (6,7) vom oberen Bildrand gewählt werden, wobei der zweite Bildbereich (8) im Bereich der Bildmitte, vorzugsweise symmetrisch zur senkrechten Mittelachse des rechteckigen Bildes, gewählt wird, wobei vorzugsweise der Abstand des zweiten Bildbereiches (8) vom oberen Bildrand größer als der Abstand des zweiten Bildbereiches (8) vom unteren Bildrand gewählt wird.

12. Vorrichtung geeignet zur Durchführung aller schritte des Verfahrens nach einem der vorhergehenden Ansprüche, **dadurch gekennzeichnet, daß** die Vorrichtung eine Verschiebungsdetektionsschaltung (100) und eine Vergrößerungsschaltung (200) umfaßt, wobei die Verschiebungsdetektionsschaltung (100) einen Bereichsverschiebungsdetektor (110), einen Bildspeicher (120) und einen Mikrocomputer (130) umfaßt und wobei die Verschiebungsdetektionsschaltung (100) die Verschiebung (15) bestimmt.

## Claims

1. Method for determining a displacement (15) of images in an image sequence, in particular for the compensation of a camera movement, a plurality of image areas (6, 7, 8) of images being available for determining the displacement (15), each image area (6, 7, 8) being provided in each case at a predetermined position of the images,
each image area (6, 7, 8) having in each case predetermined dimensions, in particular predetermined numbers of pixels in different directions of the image, **characterized in that**, for the image correction of a first image (14) in the image sequence, the displacement (15) is determined either from image data of the first image (14) and from image data of a second image (12) - preferably directly preceding the first image (14) - in the image sequence or from image data of the first image (14) and from image data of a second input image (11) - preferably directly preceding the first image (14) - in the image sequence, the displacement (15) used being an area displacement of one image area (6, 7, 8) in dependence on a certainty for the determination of the area displacement of the one image area (6, 7, 8), the area displacement of an arbitrary image area (6, 7, 8) of the plurality of image areas (6, 7, 8) being determined either from the image data of the first image (14) and of the second image (12) within the arbitrary image area (6, 7, 8) or from the image data of the first image (14) and of the second input image (11) within the arbitrary image area (6, 7, 8), a method being carried out for determining the area displacement of two arbitrary image areas (6, 7, 8) and for determining a certainty for the determination of the area displacements, the said method having the following steps:
- the area displacement and a correlation quotient are in each case formed for the two image areas (6, 7),
- a threshold value function is determined in dependence on the respective value of the area displacements of the two image areas (6, 7) determined,
- the correlation quotient of one of the two image areas (6, 7) is in each case compared with the value which results from the threshold value function for the area displacement of the other of the two image areas (6, 7),
- the certainty of the determination of the area displacement for in each case one of the two image areas (6, 7) is interpreted as sufficient if the correlation quotient determined for the one image area (6, 7) is greater than the value of the threshold value function that is to be compared with it.

2. Method according to Claim 1, **characterized in that** the determination of the correlation quotient is determined in each case for one of the plurality of image areas (6, 7, 8) according to a method having the following steps:
- displacement correlation values are determined for a plurality of possible area displacements by means of a block matching method,
- the area displacement for which the displacement correlation values become maximal is regarded as area displacement of the image area (6, 7, 8),
- the correlation quotient is formed from the maximum of the displacement correlation values, divided by the mean value of the displacement correlation values determined.

3. Method according to Claim 1, **characterized in that**, for each arbitrary value of an area displacement which is less than a predetermined first threshold value, the threshold value function assumes the value of a predetermined second threshold value, and **in that**, for each arbitrary value of an area displacement which is greater than the predetermined first threshold value, the threshold value function assumes the value of the predetermined second threshold value minus a product, the product comprising a predetermined gradient parameter and a difference as factors and the difference being formed from the arbitrary area displacement and the predetermined first threshold value.

4. Method for determining a displacement of images in an image sequence, in particular for the compensation of a camera movement, at least one image area (6, 7, 8) of images being available for determining the displacement (15), the at least one image area (6, 7, 8) being provided in each case at a predetermined position of the images, the at least one image area (6, 7, 8) having in each case predetermined dimensions, in particular predetermined numbers of pixels in different directions of the image, **characterized in that**, for the image correction of a first image (14) in an image sequence, the displacement (15) is determined either from image data of the first image (14) and from image data of a second image (12) - preferably directly preceding the first image - in the image sequence or from image data of the first image (14) and from image data of a second input image (11) - preferably directly preceding the first image - in the image sequence, the displacement (15) used being an area displacement of the at least one image area (6, 7, 8), block displacement information items, preferably displacement vectors, from a block-based coding method for the at least one image area (6, 7, 8) being used for determining the area displacement, image blocks lying within the at least one image area (6, 7, 8) being taken into account for the block displacement information items of the at least one image area (6, 7, 8), a certainty criterion being determined from the image data, which criterion is suitable for detecting local movements within at least one image area (6, 7, 8), and the determination of the displacement (15) being carried out in dependence on the certainty in such a way that the displacement (15) is not determined when local movements are detected.

5. Method according to Claim 4, **characterized in that**, for the at least one image area (6, 7, 8), a method is carried out for determining the area displacement, which comprises a horizontal and a vertical component, and for determining the certainty of the determination of the area displacement, the said method having the following steps:
- for determining the horizontal component of the area displacement, a first frequency distribution of the frequencies of different values of the horizontal component of the block displacement information items is created, the horizontal component of the area displacement corresponding to the value, for which the first frequency distribution assumes its primary maximum, of the horizontal component of the block displacement information items,
- for determining the vertical component of the area displacement, a second frequency distribution of the frequencies of different values of the vertical component of the block displacement information items is created, the vertical component of the area displacement corresponding to the value, for which the second frequency distribution assumes its primary maximum, of the vertical component of the block displacement information items,
- the certainty of the determination of the area displacement is regarded as sufficient if all of the following conditions are met:
- the absolute value of the difference in the position of the values, which correspond to the primary maximum and the secondary maximum of the first frequency distribution, of the horizontal component of the block displacement information items is less than a predetermined first difference threshold,
- the absolute value of the difference in the position of the values, which correspond to the primary maximum and the secondary maximum of the second frequency distribution, of the vertical component of the block displacement information items is less than a predetermined second difference threshold,
- the primary maximum of the first frequency distribution is greater than a first frequency threshold,
- the primary maximum of the second frequency distribution is greater than a second frequency threshold.

6. Method according to one of the preceding claims, **characterized in that** a separation of an image movement, preferably caused by a camera movement, from an additional movement which is superposed on the image movement in a few image areas (6, 7, 8) of the image to be corrected is carried out by means of the following steps:
- the probability of the image movement occurring without the additional movement is determined at various positions of an image,
- for a respective image area, the position and the dimensions are determined and fixedly prescribed in dependence on the probability of the image movement occurring without the additional movement within the one image area (6, 7, 8),
- at least one first image area (6, 7) is preferably used for determining the displacement (15).

7. Method according to one of the preceding claims, **characterized in that** the position and the dimensions of the at least one first image area (6, 7) are chosen in such a way that the at least one first image area (6, 7) of the images to be corrected is predominantly filled by the image background.

8. Method according to one of Claims 1 to 6, **characterized in that** the position and the dimensions of at least one second image area (8) are chosen in such a way that the at least one second image area (8) of the images to be corrected is predominantly filled by the image foreground.

9. Method according to Claim 7 or 8, **characterized in that** both the at least one first (6, 7) and the at least one second image area (8) are available for determining the displacement (15).

10. Method according to one of Claims 7 to 9, **characterized in that** two first image areas (6, 7) and a single second image area (8) are available for the image correction, the determination of the displacement (15) being carried out in one of the following three ways with declining priority:
- from the mean value of the area displacements of the two first image areas (6, 7) if the certainty of the determination of the area displacements of the two first image areas (6, 7) is regarded as sufficient,
- from the section displacement of that one of the two first image areas (6, 7) in the case of which the certainty of the determination of the area displacement is regarded as sufficient,
- from the area displacement of the second image area (8).

11. Method according to Claim 10, **characterized in that** the method is used for a head/shoulders recording situation, the two first image areas (6, 7) being chosen in a lateral area to the left and right, preferably symmetrically with respect to the perpendicular centre axis, of a predetermined rectangular image, the distance between the two first image areas (6, 7) and the lower image edge being chosen to be greater than the distance between the two first image areas (6, 7) and the upper image edge, the second image area (8) being chosen in the region of the image centre, preferably symmetrically with respect to the perpendicular centre axis of the rectangular image, the distance between the second image area (8) and the upper image edge preferably being chosen to be greater than the distance between the second image area (8) and the lower image edge.

12. Device suitable for carrying out all the steps of the method according to one of the preceding claims, **characterized in that** the device comprises a displacement detection circuit (100) and a magnifying circuit (200), the displacement detection circuit (100) comprising an area displacement detector (110), an image memory (120) and a microcomputer (130), and the displacement detection circuit (100) determining the displacement (15).

## Revendications

1. Procédé pour déterminer un décalage d'images (15) d'une séquence d'images notamment pour compenser un mouvement de caméra, selon lequel, pour déterminer le décalage (15), on dispose de plusieurs plages (6, 7, 8) d'images,
chaque plage d'images (6, 7, 8) étant prévue chaque fois à une position prédéterminée des images,
chaque plage d'images (6, 7, 8) ayant chaque fois des dimensions prédéterminées notamment un nombre prédéterminé de points-images dans différentes directions de l'image,
**caractérisés en ce que**
pour une correction d'images appliquée à une première image (14) de la séquence d'images, on détermine le décalage (15) soit à partir des données d'images de la première image (14) et des données d'images d'une seconde image (12) de préférence une image directement en amont de la première image (14), dans la séquence d'images, soit à partir des données d'images de la première image (14) et de données d'images d'une seconde image d'entrée (11) de la séquence d'images, et qui est de préférence directement en amont de la première image (14),
et comme décalage (15), on extrait un décalage de plage d'une plage d'images (6, 7, 8) en fonction d'une sécurité pour la détermination du décalage de plage de cette plage d'images (6, 7, 8), en déterminant
le décalage de plage d'une plage d'images quelconques (6, 7, 8) soit à partir des données d'images de la première image (14) et de la seconde image (12) dans la plage d'images quelconques (6, 7, 8) ou à partir des données d'images de la première image (14) et de la seconde image d'entrée (11) à l'intérieur de la plage d'images quelconques (6, 7, 8),
et pour déterminer le décalage de plage pour deux plages d'images quelconques (6, 7, 8) et pour déterminer une sécurité pour la détermination du décalage de plage, on exécute un procédé comprenant les étapes suivantes :
- on forme chaque fois le décalage de plage et un quotient de corrélation pour les deux plages d'images (6, 7),
- on définit une fonction de seuil selon la valeur respective des décalages de plage obtenus pour les deux plages d'images (6, 7),
- on compare le coefficient de corrélation de l'une des deux plages d'images (6, 7) à une valeur résultant de la fonction de seuil pour le décalage de plage de l'autre des deux plages d'images (6, 7),
- on définit la sécurité et la détermination du décalage de plage pour chaque fois l'une des deux plages d'images (6, 7) comme suffisantes si le coefficient de corrélation défini pour l'une des plages d'images (6, 7) est supérieur à la valeur de la fonction de seuil à laquelle il est comparé.

2. Procédé selon la revendication 1,
**caractérisé en ce que**
la détermination du quotient de corrélation se définit chaque fois pour l'un des ensembles de zones d'images (6, 7, 8) selon un procédé ayant les étapes suivantes :
- à l'aide d'un procédé de concordance de blocs, on détermine les valeurs de corrélation de décalage pour plusieurs décalages de plage possibles,
- on considère comme décalage de la plage d'images (6, 7, 8) le décalage de plage pour lequel les valeurs de correction de décalage deviennent maximales,
- on divise le quotient de corrélation à partir du maximum des valeurs de corrélation de décalage divisées par la valeur moyenne des valeurs de corrélation de décalage, déterminées.

3. Procédé selon la revendication 1,
**caractérisé en ce que**
pour chaque valeur quelconque d'un décalage de plage qui est inférieure à un premier seuil prédéterminé, on prend dans la fonction à valeur de seuil, la valeur d'un second seuil prédéterminé et pour chaque valeur quelconque d'un décalage de plage supérieur à un premier seuil prédéterminé, à partir de la fonction de seuil, on prend la valeur du second seuil prédéterminé diminué d'un produit, ce produit comprenant comme facteurs un paramètre d'augmentation prédéterminé et une différence, et la différence est formée à partir des décalages de plage quelconques et du premier seuil prédéterminé.

4. Procédé pour déterminer un décalage d'images d'une séquence d'images notamment pour la compensation d'un mouvement de caméra selon lequel,
pour déterminer le décalage (15) on dispose d'au moins une plage (6, 7, 8) d'images,
au moins cette plage d'images (6, 7, 8) est prévue à une position prédéterminée des images,
au moins une plage d'images (6, 7, 8) présente des dimensions prédéterminées notamment un nombre prédéfini de points-images dans différentes directions de l'image,
**caractérisé en ce que**
pour la correction d'images effectuée sur une première image (14) d'une séquence d'images, on définit le décalage (15) soit à partir des données d'images de la première image (14) et des données d'images d'une seconde image (12) de la séquence d'images, de préférence en amont directement de la première image, soit à partir de données d'images de la première image (14) et de données d'images d'une seconde image d'entrée (11) de la séquence d'images, et qui se trouve de préférence directement devant la première image, en extrayant comme décalage (15) un décalage de plage d'au moins une plage d'images (6, 7, 8), en utilisant pour déterminer le décalage de plage, des informations de décalage de blocs de préférence des vecteurs de décalage à partir d'un procédé de codage basé sur des blocs pour au moins une plage d'images (6, 7, 8)
et pour les informations de décalage de blocs d'au moins une plage d'images (6, 7, 8), on tient compte des blocs d'images situés à l'intérieur d'au moins une plage d'images (6, 7, 8),
et à partir des données d'images, on définit un critère de sécurité convenant pour la détection de mouvements locaux à l'intérieur d'au moins une plage d'images (6, 7, 8), et
la détermination du décalage (15) se fait en fonction de la sécurité pour que la détection du décalage (15) ne se fasse pas lors de la détection de mouvements locaux.

5. Procédé selon la revendication 4,
**caractérisé en ce que**
pour au moins une plage d'images (6, 7, 8), pour déterminer le décalage de plage qui comprend une composante horizontale et une composante verticale, et pour déterminer la sécurité de la détermination du décalage de plage, on exécute un procédé comprenant les étapes suivantes :
- pour déterminer la composante horizontale du décalage de plage, on établit une première répartition de fréquences pour les fréquences des différentes valeurs des composantes horizontales des informations de décalage de blocs, la composante horizontale du décalage de plage correspondant à la valeur des composantes horizontales des informations de décalage de blocs, pour laquelle la première distribution de fréquences prend son maximum principal,
- pour déterminer la composante verticale du décalage de plage, on établit une seconde distribution de fréquences pour les fréquences des différentes valeurs des composantes verticales des informations de décalage de blocs, la composante verticale du décalage de plage correspondant à la valeur des composantes verticales de l'information de décalage de blocs, pour laquelle la seconde distribution de fréquences prend sa valeur principale maximale,
- la sécurité de la détermination du décalage de plage étant considérée comme suffisante si toutes les conditions suivantes sont remplies :
- la valeur absolue de la différence de position des valeurs correspondant au maximum principal et au maximum auxiliaire de la première distribution de fréquences, des composantes horizontales des informations de décalage de blocs est inférieure à un premier seuil prédéterminé différentiel,
- la valeur absolue de la différence de position des valeurs correspondant au maximum principal et au maximum auxiliaire de la seconde distribution de fréquences des composantes verticales des informations de décalage de blocs est inférieure à un second seuil de différence prédéfini,
- le maximum principal de la première distribution de fréquences est supérieur à un premier seuil de fréquence,
- le maximum principal de la seconde distribution de fréquences est supérieur à un second seuil de fréquence.

6. Procédé selon l'une quelconque des revendications précédentes,
**caractérisé en ce qu'**
on effectue une séparation d'un mouvement d'images de préférence produit par un mouvement de caméra, et d'un mouvement complémentaire qui se superpose au mouvement d'images dans certaines plages d'images (6, 7, 8) de l'image que l'on veut corriger,
**caractérisé par** les étapes suivantes :
- en différentes positions d'une image, on détermine la probabilité que se produise un mouvement d'images sans le mouvement complémentaire,
- pour chaque fois une plage d'images, on détermine de manière fixe la position et les dimensions en fonction de la probabilité qu'à l'intérieur d'une plage d'images (6, 7, 8) se produise le mouvement de l'image sans mouvement complémentaire,
- on utilise au moins une première plage d'images (6, 7), de préférence pour déterminer le décalage (15).

7. Procédé selon l'une quelconque des revendications précédentes,
**caractérisé en ce qu'**
on choisit la position et les dimensions d'au moins une première plage d'images (6, 7) pour qu'au moins cette première plage d'images (6, 7) remplisse l'image à corriger principalement par l'arrière-plan d'image.

8. Procédé selon l'une quelconque des revendications 1 à 6,
**caractérisé en ce qu'**
on choisit la position et les dimensions d'au moins une seconde plage d'images (8), et
on remplit au moins la seconde plage d'images (8) des images à corriger de préférence avec l'avant-plan d'image.

9. Procédé selon les revendications 7 ou 8,
**caractérisé en ce que**
pour déterminer le décalage (15), on dispose à la fois d'au moins une première plage d'images (6, 7) et d'une seconde plage d'images (8).

10. Procédé selon l'une quelconque des revendications 7 à 9,
**caractérisé en ce que**
deux premières plages d'images (6, 7) et une unique seconde plage d'image (8) sont disponibles pour la correction d'images,
la détermination du décalage (15) se faisant suivant l'un des trois procédés ci-après avec une priorité croissante :
- à partir de la valeur moyenne des décalages de plage des deux premières plages d'images (6, 7), si la sécurité de la détermination du décalage de plage des deux premières plages d'images (6, 7) est considérée comme suffisante,
- à partir du décalage de segments de celles des deux premières plages d'image (6, 7) pour laquelle la sécurité de la détermination du décalage par plage est considérée comme suffisante,
- à partir du décalage de la seconde plage d'images (8).

11. Procédé selon la revendication 10,
**caractérisé en ce que**
l'on utilise le procédé pour une situation de prise de vues tête/épaule, selon lequel les deux premières plages d'images (6, 7) choisissent une plage latérale à gauche et à droite de préférence symétrique par rapport à l'axe central vertical d'une image verticale prédéfinie,
la distance des deux premières plages d'images (6, 7) par rapport au bord inférieur étant supérieure à la distance des deux premières plages d'images (6, 7) et le bord supérieur de l'image,
on choisit la seconde plage d'image (8) au niveau du milieu de l'image de préférence de façon symétrique par rapport à l'axe médian vertical de la plaque rectangulaire,
la distance entre la seconde plage d'images (8) et le bord supérieur de l'image étant de préférence supérieure à la distance entre la seconde plage d'images (8) et le premier bord inférieur d'images.

12. Dispositif applicable à l'exécution de toutes les étapes du procédé ci-dessus selon l'une quelconque des revendications précédentes,
**caractérisé en ce que**
le dispositif comporte un circuit de détection de décalage (100) et un circuit d'agrandissement (200), le circuit de détection de décalage (100) comprenant un détecteur de décalage de plage (110), d'une mémoire d'images (120) et un microprocesseur (130) et le circuit de détection d'images (100) définit le décalage (15).
